# EUROPEAN PATENT APPLICATION

(11) **EP 4 389 508 A1**
(43) Date of publication of application: **26.06.2024**
(21) Application number: 22214960.1
(22) Date of filing: 20.12.2022
(51) Int. Cl.: B60L 53/65

(54) **A METHOD FOR ELECTRIC VEHICLE CHARGING ACCESS CONTROL**

(71) Applicant: ABB E-mobility B.V., 2629 JG Delft (NL)
(72) Inventor: WEI, Vincent-Cong, Shanghai 210018 (CN); CHEN, Pan, Pudong New Area 201315 (CN); QI, Sven, 2497 CN Den Haag (NL)
(74) Representative: Maiwald GmbH

(57) **Abstract**

The invention provides a computer-implemented method for method for electric vehicle charging access control comprising a charging station for electric vehicles detecting the presence of an electric vehicle available for establishing a wireless data connection, establishing a wireless data connection with the electric vehicle, receiving, via the wireless data connection, identification data identifying the electric vehicle, and authorizing the charging of the electric vehicle in response to determining that the electric vehicle is registered as eligible for using the charging station based on the identification data.

## Description

### FIELD OF THE INVENTION

The invention pertains to a method for electric vehicle charging access control, a system comprising a charging station, a computer program product, and a computer-readable medium.

### BACKGROUND

The present invention concerns charging of an electric vehicle, specifically, the approval for starting the charging of an electric vehicle.

Clearly, charging at a charging station should only be available for selected parties, i.e., access control of some sort is required. Parties should at least be identifiable for determining who performed the charging or should be required to be authorized to use the specific charging station in question. Many charging stations address this by users having to use smart cards or smart phone applications for authentication whenever they wish to start charging their electric vehicles.

This is cumbersome and time-consuming. Plug-and-charge functions for these solutions would require deactivating authentication altogether, thereby allowing uncontrolled access to the charging station. Previous attempts to address this issue yield complex solutions that require much effort to implement.

Indeed, authorization and recognition are very challenging between different devices that need to be linked and in order to allow secure and reliable billing after charging. Power Line Communication has been used, e.g. based on ISO15118. However, in the context of an AC charger, required components are costly and very few devices are equipped with the components, which may lead to compatibility issues. In the context of DC chargers, there are similar compatibility issues, as the CCS standards used in some regions, e.g. the EU and the US, are not used in other regions, e.g., Japan or China.

It is therefore an object of the present invention to provide a method that address at least some of the above needs, particularly, provides a low-complexity solution for controlling access to charging of electric vehicles.

### SUMMARY

At least some of the challenges are solved by the subject-matter of the independent claims. Preferred embodiments are laid down in the dependent claims.

The invention provides a computer-implemented method for electric vehicle charging access control. The method comprises detecting, by a charging station for electric vehicles, the presence of an electric vehicle available for establishing a wireless data connection. The method further comprises the charging station initiating establishing a wireless data connection with the electric vehicle. The method further comprises the charging station receiving, via the wireless data connection, identification data identifying the electric vehicle. The method further comprises the charging station determining that the electric vehicle is registered as eligible for using the charging station based on the identification data and authorizing the charging of the electric vehicle in response to determining that the electric vehicle is registered as eligible for using the charging station.

Thus, the approach allows for a simple solution for controlling access to charging of electric vehicles.

Even though a risk remains that a party that is not authorized for using the charging station may also perform charging, access is nonetheless limited to identifiable parties, which allows for retroactive action being taken against unauthorized parties.

The term "electric vehicle", also referred to as EV in the following, is to be understood broadly. An electric vehicle may be an electric car, a hybrid car, an electric scooter, truck, bus, heavy vehicles, ships, plane or the like.

The electric vehicle according to the present disclosure may comprise a charging inlet for establishing a connection to the charging station, for example a plug or a socket for a charging cable. The car may further comprise a battery system, the battery system electrically connected to the charging inlet such that the battery system is chargeable via the charging inlet.

The electric vehicle may comprise a socket cap configured to cover the socket of the electric vehicle when no plug is inserted in the socket. The cover may be connected to a drive configured to automatically remove the socket cap prior to charging, in particular, in response to the charging having been authorized.

The electric vehicle may also comprise a wireless connection module configured for establishing the wireless connection, for example a Bluetooth module or a NFC module.

The Bluetooth module may comprise a Bluetooth Low Energy Wireless system-on-chip, for example.

The use of Bluetooth is particularly advantageous as it provides an easy and cheap method and is supported by most devices. Thus, compatibility will rarely be an issue. Bluetooth thus allows for building communication, which may be followed by authorization and/or recognition of a vehicle.

The term "electric vehicle charging" is to be understood broadly. It may comprise any process of charging the power storage storing power for driving the electric vehicle via a socket-plug connection between the electric vehicle and the charging station.

The term "charging station for electric vehicles", also referred to as electric vehicle supply equipment, EVSE, is to be understood broadly. The charging station may be configured to provide electric power to an electric vehicle, particularly via a socket-plug connection. Specifically, the charging station may be configured to provide the electric power suitable for charging a power storage of the electric vehicle.

The charging station may comprise an AC charger.

The charging station may comprise a socket, to which a charging cable may be connected via a plug. The charging station may comprise a vehicle connector which may comprise the socket.

The charging station may be configured to provide plug-and-charge charging, that is, a charging mode wherein charging of the electric vehicle starts automatically upon electrically connecting the electric vehicle to the charging station. This does not preclude that authentication steps are performed after electrically connecting the electric vehicle to the charging station and prior to the charging.

The charging station may comprise a wireless connection module configured for establishing the wireless connection, for example a Bluetooth module or an NFC module.

Furthermore, each of the charging station and the vehicle may comprise a respective control unit

The term "charging access control" is to be understood broadly and may refer to a mechanism that provides access to a charging function selectively.

It is noted that the charging function and plug-and-charge function may, as a default setting, be disabled and may only be enabled in response to authorizing the electric vehicle.

The detecting the presence of an electric vehicle available for establishing a wireless data connection is to be understood broadly. It may entail that the electric vehicle itself or a user provide an indication of the presence of the electric vehicle and the charging station detects the indication and/or that the charging station monitors its surroundings and recognizes the presence of an electric vehicle in the absence of an indication being provided by the electric vehicle or the user.

The initiating establishing a wireless data connection with the electric vehicle may comprise initiating a Bluetooth connection between the electric vehicle and the charging station. The charging station may, to that end, have its Bluetooth function active and set to detect available potential partner devices, and may be configured to, upon detecting an available potential partner device, attempt to establish a Bluetooth connection with said potential partner device.

The term identification data is to be understood broadly. For example, the identification data may contain any information allowing the charging station to distinguish between different electric vehicles. Thus, the identification data need not have any specific format. As an example, an identification code or number may be comprised in the identification data. The identification data may comprise a unique identification of the vehicle.

Determining whether the electric vehicle is registered as eligible for using the charging station based on the identification data may comprise retrieving data identifying eligible electric vehicles and determining, from the identification data, whether the identification data identifies the electric vehicle as one of the eligible electric vehicles. For example, this may entail matching an identification code or number comprise and the identification data with a list of eligible identification codes or numbers.

Authorizing the charging "in response to determining" may particularly entail that the charging is only authorized in case it is determined that the electric vehicle is registered as eligible for using the charging station.

The authorizing charging the electric vehicle may cause the charging function to be automatically activated or a plug-and-charge function to be automatically activated. It may also cause an indication of authorization being output.

It is to be understood that the authorizing may, at least initially only be performed in response to determining that the electric vehicle is registered as eligible for using the charging station based on the identification data. That is, if it is determined that that the electric vehicle is not registered as eligible for using the charging station based on the identification data, authorization may at least initially be denied. However, as will be seen below, further steps may follow that may eventually lead to authorizing the charging even if it was determined that the electric vehicle is not registered as eligible for using the charging station based on the identification data, i.e., if authorization was initially denied.

As can will be seen in more detail below, the present disclosure allows, among others, for addressing the above-mentioned challenges, by providing a charging station, e.g., an EVSE, which may have a plug-and-charge feature based on Bluetooth automatic authentication. For example a VIN code may be transmitted from the electric vehicle to the charging station, the charging station may then compare it with the pre-bound VIN information for electric vehicle identity verification. Once plugged in and authenticated, the charging process may start automatically, no additional action may be required. Meanwhile, unauthorized users cannot use the charger.

According to the present disclosure, the method may comprise the charging station denying charging of the electric vehicle in response to determining that the electric vehicle is not registered as eligible for using the charging station based on the identification data. Thus, access to the charging can reliably and efficiently controlled, particularly, restricted.

According to the present disclosure, the method may comprise the charging station, in response to determining that the electric vehicle is not registered as eligible for using the charging station based on the identification data, prompting the electric vehicle and/or a user to prove eligibility for using the charging station and authorizing the charging of the electric vehicle in response to receiving prove of eligibility. Such a prompt may be output by the charging station itself and/or by an application on a user device. The proving of eligibility may comprise providing information other than the identification data that allows for verifying eligibility. For example, such information may comprise an access key or password. The prove of eligibility may also be provided by hardware means, e.g., an IC card or transponder or the like. Thus, it can be avoided that an eligible user is denied use the charging station, for example, due to a technical error.

According to the present disclosure, the method may comprise the charging station denying charging of the electric vehicle in response to determining that no valid prove of eligibility is received. This ensures proper access control.

According to the present disclosure, the method may comprise the charging station retrieving from a data storage registration data configured to allow for identifying electric vehicles registered as eligible for using the charging station. The data storage may be access-controlled. For example, the charging station may have limited access to the data storage, e.g., access only to data that pertain to said charging station.

The data storage may be an internal data storage, i.e., internal to the charging station, or an external data storage, i.e., external to charging station. An external data storage may, for example, include, but is not limited to, a cloud-based data storage or local server or customer server. The charging station may then access the data storage via a communication network, e.g., a mobile network, LAN, and/or WLAN.

The charging station may retrieve data from the data storage and based thereon determine whether a given vehicle is registered as eligible for using the charging station. This is a reliable and low-effort way of eligibility-checks.

According to the present disclosure, the identification data may comprise a vehicle identification number and the registration data may comprise a list of vehicle identification numbers of the electric vehicles registered as eligible for using the charging station. This is a reliable and low-effort way of determining eligibility. It also allows for a need-to-know data approach in terms of data accessible to the charging station, improving data security.

According to the present disclosure, determining whether the electric vehicle is registered as eligible for using the charging station based on the identification data may comprise determining whether the vehicle identification number comprised in the identification data is included in the list of vehicle identification numbers. This is a low-effort way to determine eligibility.

According to the present disclosure, the method may comprise the electric vehicle, in response to the charging station authorizing the charging of the electric vehicle, enabling connection between a socket of the electric vehicle and the plug of a charging cable.

In particular, the electric vehicle may prompt automatic opening of a socket cap of the socket, e.g., by means of a drive, or disengaging a blocking element preventing the connection between socket and plug.

According to the present disclosure, the method may comprise the charging station, in response to authorizing the charging of the electric vehicle, enabling a charging function of the charging station and/or enabling a plug-and-charge function of the charging station. In particular, the enabling of the respective function may be performed automatically, i.e., without requiring further user interactions.

Particularly, enabling the charging function may comprise providing charging power to the vehicle by the charging station. Enabling a plug-and-charge function may comprise configuring the charging station in such a manner that charging commences once the electric vehicle is connected, i.e., plugged into, the charging station. Enabling the charging function or the plug-and charge function may be seen as activating the charging function or the plug-and charge function, respectively.

According to the present disclosure, the method may comprise the charging station periodically scanning for the presence of an electric vehicle available for establishing a wireless data connection. Particularly, once the scanning detects the presence of a vehicle, the other steps of the present method may automatically be initiated. This allows for reduced delays and means that the user or the vehicle need not signal the presence of the vehicle.

According to the present disclosure, the method may comprise the charging station receiving charge mode setting information from the vehicle via the wireless data connection and setting operation parameters for the charging function according to the charge mode setting information. The charge mode setting information may be sent alongside the identification data or it may be sent after the identification data. At least part of the charge mode setting information may also be comprised in the identification data, e.g., the identification data may comprise information allowing for the charging station to determine or derive one or more operation parameters, e.g., based on a type of vehicle or the like.

According to the present disclosure, the method may comprise a user binding the charging station to an application and registering an electric vehicle with the application, thereby registering the electric vehicle as eligible for using the charging station.

An application is to be understood as a software application for use on a computing device, e.g., a mobile device or a desktop device. Specifically, the application may be a web application. The user binding the charging station to the application and registering the electric vehicle with the application may entail the user providing user input to the application via a user interface.

The method of the present disclosure may comprise monitoring a charging cable plug-in signal. At least one of the following signal contacts may be used, as an example: Control Pilot (CP) or a Proximity Plug (PP). The signals may be referred to as cable plug-in signal CP or cable plug-in signal PP, respectively. A potential communication interference may be mitigated by the monitoring the cable plug-in signal CP and/or PP.

The method of the present disclosure may comprise carrying out, by the electric vehicle, an EV open socket cover functionality. The functionality may comprise, after handshake between the EV and the EVSE, causing the socket cover of the EV to be opened automatically in response to the handshake. A drive module of the EV, e.g. a motor or the like, may be employed for this purpose, the drive module of the EV configured to move the socket cover in an open position in response to the handshake.

The present disclosure also provides a system comprising a charging station, the system configured to carry out the method according to the present disclosure. In particular, the charging station of the system may be configured to carry out any of the steps of the method of the present disclosure described above as being performed by the charging station, particularly any steps that are not specified as being performed by an electric vehicle or a user.

The charging station may, in particular, be configured to detect the presence of an electric vehicle available for establishing a wireless data connection, initiate establishing a wireless data connection with the electric vehicle, receive, via the wireless data connection, identification data identifying the electric vehicle, determining whether the electric vehicle is registered as eligible for using the charging station based on the identification data, and authorize the charging of the electric vehicle in response to determining that the electric vehicle is registered as eligible for using the charging station.

As outlined above, the term "charging station for electric vehicles", also referred to as electric vehicle supply equipment, EVSE, is to be understood broadly. The charging station may be configured to provide electric power to an electric vehicle, particularly via a socket-plug connection. Specifically, the charging station may be configured to provide the electric power suitable for charging a power storage of the electric vehicle.

The charging station may comprise an AC charger.

The charging station may comprise a socket, to which a charging cable may be connected via a plug. The charging station may comprise a vehicle connector which may comprise the socket.

The charging station may be configured to provide plug-and-charge charging, that is, a charging mode wherein charging of the electric vehicle starts automatically upon electrically connecting the electric vehicle to the charging station. This does not preclude that authentication steps are performed after electrically connecting the electric vehicle to the charging station and prior to the charging.

The charging station may comprise a wireless connection module configured for establishing the wireless connection, for example a Bluetooth module or an NFC module.

Furthermore, each of the charging station may comprise a control unit.

The system may further comprise an electric vehicle configured for transmitting, to the charging station, identification data identifying the electric vehicle via the wireless data connection and for being charged by the charging station in response to the charging station authorizing the charging of the electric vehicle, particularly by plug-and-charge charging.

As outlined above, the term "electric vehicle", also referred to as EV, is to be understood broadly. An electric vehicle may be an electric car, a hybrid car, an electric scooter, or the like.

The electric vehicle according to the present disclosure may comprise a charging inlet for establishing a connection to the charging station, for example a plug or a socket for a charging cable. The car may further comprise a battery system, the battery system electrically connected to the charging inlet such that the battery system is chargeable via the charging inlet.

The electric vehicle may comprise a socket cap configured to cover the socket of the electric vehicle when no plug is inserted in the socket. The cover may be connected to a drive configured to automatically remove the socket cap prior to charging, in particular, in response to the charging having been authorized.

The electric vehicle may also comprise a wireless connection module configured for establishing the wireless connection, for example a Bluetooth module or a NFC module.

Furthermore, the vehicle may comprise a control unit.

The system according to the present disclosure may also comprise an application, for example a web application, for use on a mobile device, e.g. a mobile phone. The application may be configured bind the charging station to the application and to register the electric vehicle with the application. Particularly, the application may be configured to receive user input via a user interface, and in response to the user input and based at least in part on information provided by the user input, bind the charging station to the application and register the electric vehicle with the application.

The present disclosure also provides a computer program product comprising instructions which, when the program is executed by a computing system, cause the computing system to carry out any of the methods of the present disclosure.

The computing system may comprise one or more computing device and, particularly, may be a distributed computing system.

The invention also provides a computer-readable medium comprising instructions which, when executed by a computing system, cause the computing system to carry out any of the methods of the present disclosure.

The features and advantages outlined above in the context of the method similarly apply to the electric vehicle, charging station, system, computer program product, and computer-readable medium described herein.

Further features, examples, and advantages will become apparent from the detailed description making reference to the accompanying drawings.

### BRIEF DESCRIPTION OF THE DRAWINGS

In the accompanying drawings,
Fig. 1a to 1d are schematic illustrations of systems according to the present disclosure;
Figs. 2 is a flowchart schematically illustrating a method according to the present disclosure;
Fig. 3 is a schematic illustration of a system according to the present disclosure;
Fig. 4 is a flowchart illustrating an exemplary method according to the present disclosure; and
Fig. 5 is a schematic illustration of a system employing SMART EV according to the present disclosure.

### DETAILED DESCRIPTION

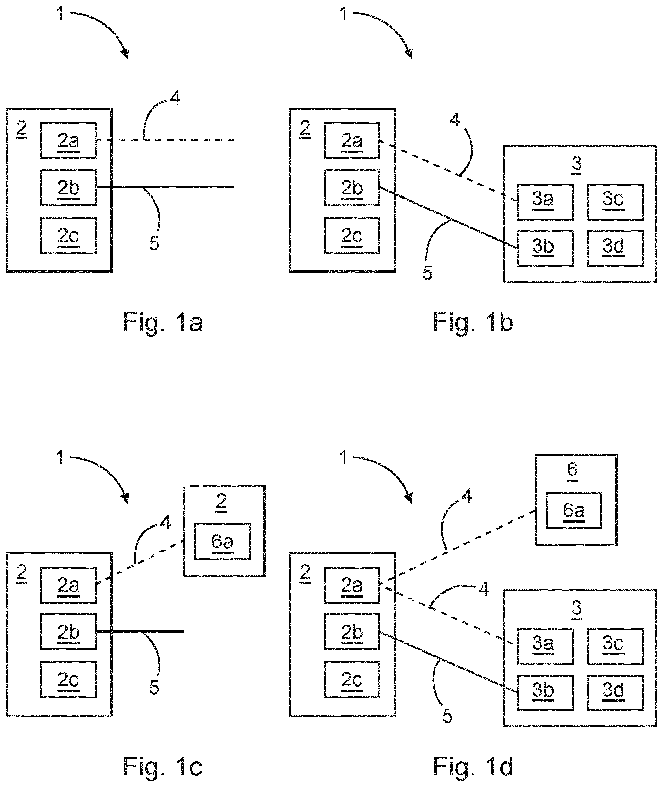

Fig. 1a to 1d are schematic illustrations of systems according to the present disclosure

Fig. 1a shows a system 1 according to the present disclosure comprising a charging station 2 for electric vehicles. Fig. 1a also illustrates a wireless data connection, e.g., Bluetooth connection 4, which the charging station may establish with an application and/or an electric vehicle for data transmission. Also shown is an electrical connection 5, e.g., for connecting an electric vehicle to the charging station.

The charging station 2 may comprise a wireless data communication interface 2a for wirelessly connecting the charging station to other devices, for example an electric vehicle or a mobile device. The charging station may comprise a charging unit 2b optionally comprising a plug or socket. The charging unit may be configured to be connected to an electric vehicle via an electrical connection 5, e.g. comprising a charging cable.

The charging station may be configured to detect the presence of an electric vehicle available for establishing a wireless data connection, initiate establishing a wireless data connection with the electric vehicle, receive, via the wireless data connection, identification data identifying the electric vehicle, determining whether the electric vehicle is registered as eligible for using the charging station based on the identification data, and authorize the charging of the electric vehicle in response to determining that the electric vehicle is registered as eligible for using the charging station.

Fig. 1b shows a system as shown in Fig. 1a and, in addition, comprising an electric vehicle 3, in a state where it is electrically connected to the charging station 2 via the electrical connection 5. The electric vehicle may be charged by the charging station via the electrical connection. Moreover, wireless data connection 4, e.g., a Bluetooth connection, is established between the electric vehicle and the charging station.

The electric vehicle may further comprise a wireless data communication interface 3a, configured to allow for establishing wireless data connection with other devices, particularly the charging station.

The electric vehicle may further comprise a power module 3b comprising a battery and a power inlet, for example plug or socket, for receiving power via an electrical connection 5, from the charging station 2, e.g., via a charging cable.

The electric vehicle may further comprise a processing unit 3c for controlling functionality of the electric vehicle, for example controlling data flow via the wireless data connection and/or controlling functionality of hardware components of the electric vehicle, for example, of a drive 3d configured to automatically open a socket cap in preparation for charging.

The electric vehicle may be configured to transmit identification data to the charging station in response to the data connection being established or in response to a request received from the charging station via the data connection.

The electric vehicle may also be configured to transmit charging mode setting data to the charging station via the data connection and the charging station may be configured to set operation parameters for charging the electric vehicle based on the charging mode setting data.

Fig. 1c shows a system as shown in Fig. 1a and, in addition, comprising an application 6.

The application may, for example, be a mobile phone application. A wireless data connection 4, e.g., Bluetooth connection, may be established between the application and the charging station. The electrical vehicle may be registered for being eligible for using the charging station by means of the application. To that end, the application may be configured to bind the charging station to the application and to register the electric vehicle with the application. The application may then transmit registration information to the charging station to inform the charging station of electric vehicles eligible for using the charging station. The charging station may be configured to store the registration information locally and/or remotely. The application may provide, e.g. on a display of a mobile device, a graphical user interface for the user to perform the binding and registering, particularly, a user interface for receiving user input to prompt binding and registering.

Fig. 1d shows a system as shown in Fig. 1a and comprising an electric vehicle 3 and an application 6, for example the ones shown in Figs. 1b and 1c, respectively.

It can be seen that the wireless data connection may connect the application with the charging station or may connect the electric vehicle with the charging station. The charging station may have different roles depending on whether it is connected with the application or with the electric vehicle. When it is connected to the application, it may have the role of a slave in a master-slave relationship. When it is connected to the electric vehicle, it may have the role of a master in the master-slave relationship. Accordingly, the charging station may be configured to enable role reversal, e.g., for Bluetooth connections.

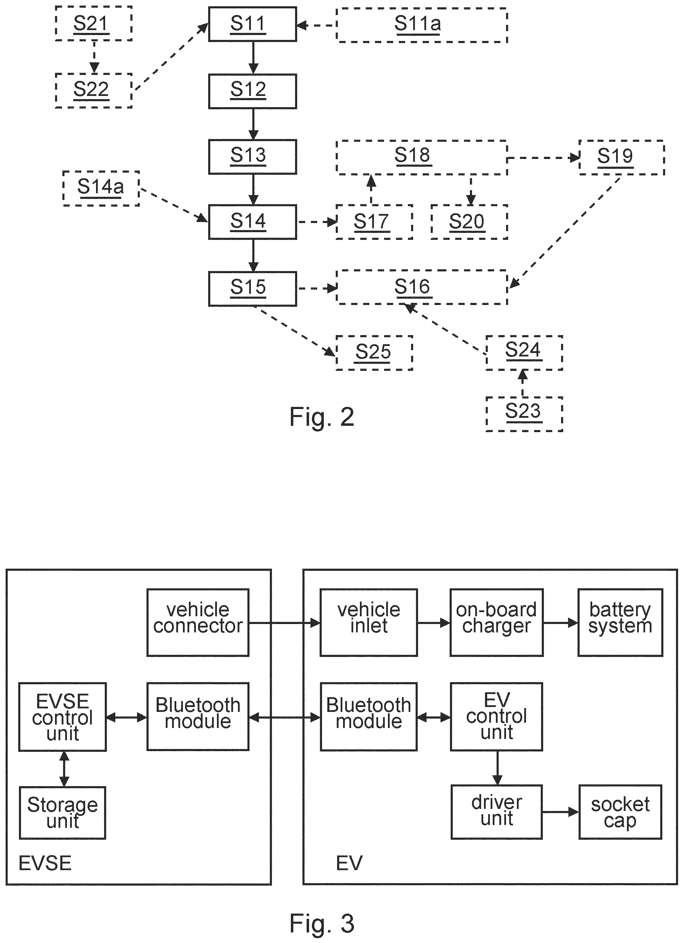

Fig. 2 is a flowchart illustrating a method according to the present disclosure.

The method comprises step S11 of detecting, by a charging station for electric vehicles, the presence of an electric vehicle available for establishing a wireless data connection.

In optional step S11a, the charging station periodically scans for the presence of an electric vehicle available for establishing a wireless data connection. As such, step S11a may be performed prior to step S11, step S11 being the result of the scanning for the presence.

The method also comprises step S12 of the charging station initiating establishing a wireless data connection with the electric vehicle. This step may be performed automatically and in response to detecting the presence of the electric vehicle in step S11.

The method also comprises step S13 of the charging station receiving, via the wireless data connection, identification data identifying the electric vehicle. This step may be performed after step S12, particularly automatically upon establishing the data connection in step S12. The identification data may be provided to the charging station in response to the charging station requesting the identification data upon establishing the wireless data connection or the identification data may be automatically transmitted to the charging station in response to the wireless data connection being established.

The method also comprises step S14 of the charging station determining whether the electric vehicle is registered as eligible for using the charging station based on the identification data. This step may be performed automatically in response to receiving the identification data, or only in response to receiving a respective via the data connection.

The method also comprises step S15 of the charging station authorizing the charging of the electric vehicle in response to determining that the electric vehicle is registered as eligible for using the charging station based on the identification data.

The method may also comprise optional step S14a of the charging station retrieving from a data storage, particularly an internal data storage or an external data storage, e.g. a cloud-based data storage, registration data configured to allow for identifying electric vehicles registered as eligible for using the charging station. The data may be retrieved only in response to the data connection being established or identification data being received by the charging station or may be retrieved, alternatively or additionally, at other times, e.g., at regular intervals.

The method may also comprise optional step S16 of the charging station, in response to authorizing the charging of the electric vehicle, enabling a charging function of the charging station and/or enabling a plug-and-charge function of the charging station. Thus, in principle, charging may commence immediately upon authorization in case vehicle is already connected to the charging station or once the vehicle is connected to the charging station.

It is noted that the charging function and plug-and-charge function may, as a default setting, be disabled and may only be enabled in response to authorizing the electric vehicle. The charging station may then return to the default setting of the charging function being disabled after the charging has terminated.

The method may also comprise optional step S17 of the charging station denying charging of the electric vehicle in response to determining that the electric vehicle is not registered as eligible for using the charging station based on the identification data. Particularly, this means that in case the charging function and the plug-and-charge function are, as a default setting, disabled, no charging may occur at all in case the charging is denied, i.e., in case charging is not authorized.

The method may also comprise optional step S18 of the charging station, in response to determining that the electric vehicle is not registered as eligible for using the charging station based on the identification data, prompting the electric vehicle and/or a user to prove eligibility for using the charging station. For example, the prompt may be output by the charging station itself or the charging station may cause the application to output the prompt.

The method may also comprise optional step S19 of the charging station authorizing the charging of the electric vehicle in response to receiving prove of eligibility.

The method may also comprise optional step S20 of the charging station denying charging of the electric vehicle in response to determining that no valid prove of eligibility is received.

The method may also comprise optional step S21 of binding the charging station to an application. This step may be performed so as to be able to register electric vehicles as eligible for charging with the charging station via the application.

The method may also comprise optional step S22 of registering an electric vehicle with the application, thereby registering the electric vehicle as eligible for using the charging station. This step may be performed after binding the charging station to the application.

Alternatively, the electric vehicle may be registered with the application and the charging station may be bound to the application subsequently and the vehicle may then be registered with the charging station by means of the application.

The method may also comprise optional step S23 of the charging station receiving charge mode setting information from the vehicle via the wireless data connection. Charge mode setting information may be obtained together with or at least partially included in the identification data or may be provided separately, particularly after, the identification data.

The method may also comprise optional step S24 of the charging station setting operation parameters for the charging function according to the charge mode setting information. The operation parameters may be set at any time after receiving the charge mode setting information and prior to beginning the charging of the electric vehicle, particularly, may be set before, concurrently, or after steps S14 and S15. By setting the operation parameters before steps S14 and S15, charging may commence more quickly once authorization is complete.

The method may also comprise optional step S25 of the electric vehicle, in response to the charging station authorizing the charging of the electric vehicle, enabling connection between a socket of the electric vehicle and the plug of a charging cable, particularly, prompts automatic opening of a socket cap of the socket.

Some further aspects and examples of the present disclosure will be outlined below.

An exemplary system having a charging station, here an EVSE, and an electric vehicle, EV, is shown in Fig. 3 and described below.

In this example, an EVSE with plug-and-charge feature based on Bluetooth automatic authentication is shown schematically as a system block diagram.

The system contains the EVSE and the EV. The EVSE comprises a vehicle connector, an EVSE control unit, a Bluetooth module, and a storage unit. The EV comprises a vehicle inlet, an on-board charger, a battery system, an EV control unit, a Bluetooth module, a driver unit, and a socket cap.

A method according to the present disclosure may, for example, be carried out as follows, e.g., by means of the above-described system. While commissioning, a VIN code of the EV is registered and stored in the storage unit of the EVSE, and the plug-and-charge mode is enabled when the commissioning is done.

In operation, EVSE may scan for devices periodically and, if a EV is detected during the scanning, a Bluetooth communication connection may automatically be established between the EVSE and the EV.

The EV may transmit the VIN code of the EV to the EVSE. The EVSE may check whether the VIN code is in the registered VIN code list. If the VIN code is in the registered VIN code list, then the authentication is successful, i.e., authentication passes.

An indication of successful authentication may be transmitted to the EV. In response to successful authentication, the EV control unit may issue a command to the driver unit to open the socket cap. The user can plug the vehicle connector in the vehicle inlet.

Once the EV is authenticated and the charger is plugged-in, the charging process may start automatically. Thus, no additional user action is required and an automatic plug-and-charge function is provided.

Meanwhile, unauthorized users cannot use the EVSE.

A system according to the present disclosure comprising an EVSE with plug-and-charge feature based on Bluetooth automatic authentication, for example configured as described in the context of Fig. 3, may comprise a smart phone app, in addition to the EVSE and the EV. In this case, a master-slave integration of the Bluetooth module may be adopted in the EVSE. The method then may involve a Bluetooth (e.g. BLE) role switching mechanism.

That is, in a Bluetooth communication connection between the smart phone app and the EVSE, the Bluetooth module of the smart phone is the master while the one in the EVSE is the slave. In the Bluetooth communication connection between the EVSE and the EV, particularly also when scanning for the EV, the Bluetooth module in the EVSE is the master while the one in the EV is the slave.

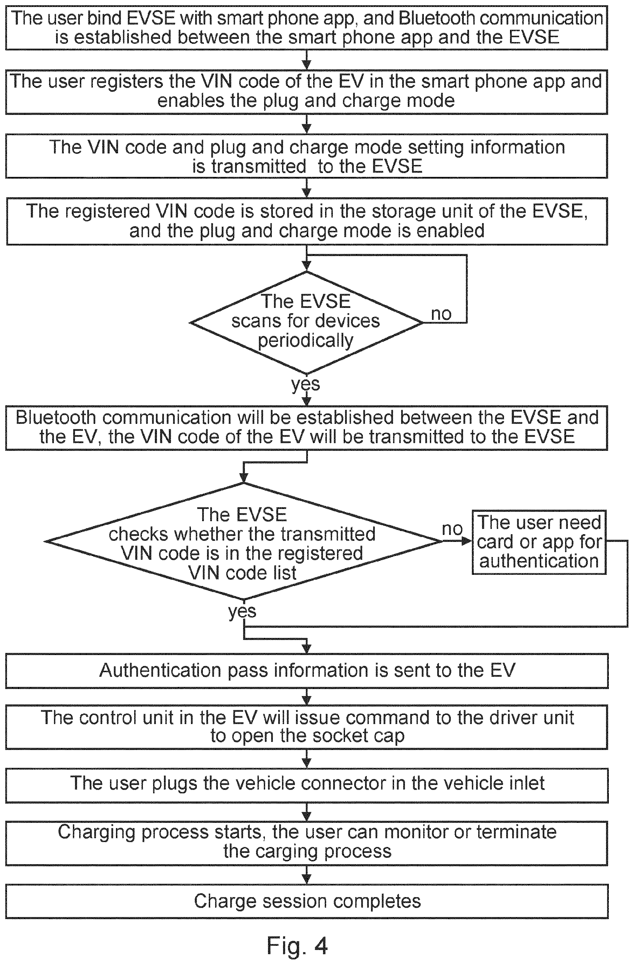

A detailed exemplary method according to the present disclosure will be described below making reference to Fig. 4.

A user binds the EVSE with a smart phone app, and Bluetooth communication connection is established between the smart phone app and the EVSE. The user registers the VIN code of the EV in the smart phone app and enables the plug and charge mode. The VIN code and plug-and-charge mode setting information is transmitted to the EVSE. The registered VIN code is stored in the storage unit of the EVSE, and the plug-and-charge mode is enabled.

The EVSE scans for devices periodically. If an EV is scanned, Bluetooth communication connection will be established between the EVSE and the EV, the VIN code of the EV will be transmitted to the EVSE. The EVSE checks whether or not the transmitted VIN code is in the registered VIN code list. If yes, authentication pass information will be sent to the EV, otherwise the user needs a card or app for authentication.

The control unit in the EV will issue a command to the driver unit to open the socket cap. The user may then connect the vehicle and the EV. Subsequently, in particular automatically in case of a plug-and-charge function, the charging process starts. Optionally, the user can monitor or terminate the charging process. The charging may continue until the charge session completes.

It is to be understood that at least some of the above steps are optional and may be omitted.

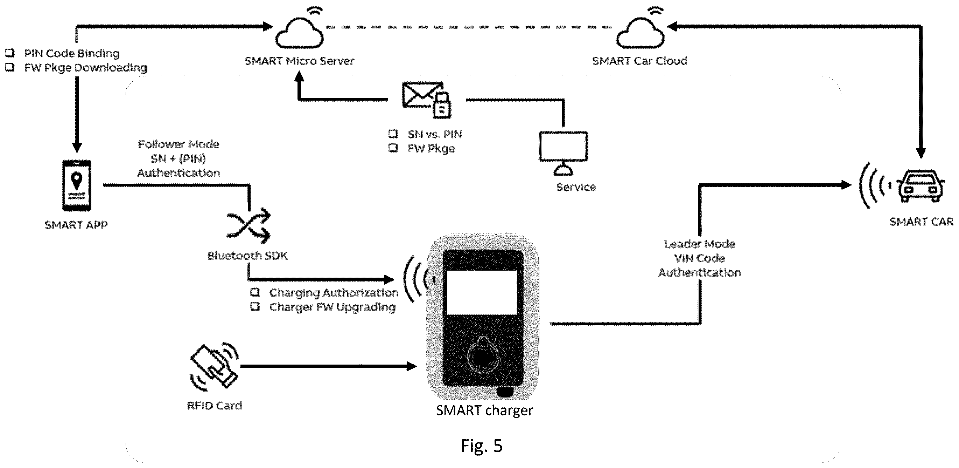

Another example will be provided below for a system and method according to the present disclosure, referred to as "SMART EV" in the following. It is illustrated also in Fig. 5.
1. A BLE application is (pre)installed on the AC charger and the EV. When such an AC charger and EV approach each other, they will pair and communicate automatically according to the protocol defined, optionally with encryption.
2. When the AC charger is installed and commissioned, the user will use a mobile app send his EV identity (e.g. VIN) to the AC charger, which will be saved locally on a charger in an "authorization list".
3. Then, the below scenario will be supported:
   a. The user may park the authorized EV near the AC charger.
   b. The user may then pick the connector from the charger and plug it into the EV.
   c. Charging will then start automatically.

This SMART implementation is particularly suitable for residential settings but can be extended to commercial cases.

Due to the above-described system and method, billing can be done automatically in backend because EV/EVSE can recognize each other.

According to the present disclosure, in addition to the use of Bluetooth, the method may comprise monitoring the cable plug-in signal CP/PP. A potential communication interference may be mitigated by the monitoring the cable plug-in signal CP/PP.

According to the present disclosure, an EV "open socket cover" functionality can be implemented on EV side after handshake between the EC and the EVSE. That is, the socket cover may be opened automatically in response to the handshake.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

## Claims

1. A computer-implemented method for electric vehicle charging access control, the method comprising:
detecting (S11), by a charging station for electric vehicles, the presence of an electric vehicle available for establishing a wireless data connection;
the charging station initiating (S12) establishing a wireless data connection with the electric vehicle;
the charging station receiving (S13), via the wireless data connection, identification data identifying the electric vehicle;
the charging station determining (S14) whether the electric vehicle is registered as eligible for using the charging station based on the identification data; and
the charging station authorizing (S15) the charging of the electric vehicle in response to determining that the electric vehicle is registered as eligible for using the charging station.

2. The method of claim 1, wherein the charging station denies (S17) charging of the electric vehicle in response to determining that the electric vehicle is not registered as eligible for using the charging station based on the identification data.

3. The method of claims 1 or 2,
wherein the charging station, in response to determining that the electric vehicle is not registered as eligible for using the charging station based on the identification data, prompts (S18) the electric vehicle and/or a user to prove of eligibility for using the charging station; and
wherein the charging station authorizes (S19) the charging of the electric vehicle in response to receiving prove of eligibility for using the charging station.

4. The method of claim 3, wherein the charging station denies (S20) charging of the electric vehicle in response to determining that no valid prove of eligibility is received.

5. The method of any of the preceding claims, wherein the charging station retrieves (S14a) from a data storage, particularly an internal data storage or an external data storage, registration data configured to allow for identifying electric vehicles registered as eligible for using the charging station.

6. The method of any of the preceding claims,
wherein the identification data comprises a vehicle identification number and the registration data comprises a list of vehicle identification numbers of electric vehicles registered as eligible for using the charging station, and
wherein determining whether the electric vehicle is registered as eligible for using the charging station based on the identification data comprises determining whether the vehicle identification number comprised in the identification data is included in the list of vehicle identification numbers.

7. The method of any of the preceding claims, wherein the electric vehicle, in response to the charging station authorizing the charging of the electric vehicle, enables connection (S25) between a socket of the electric vehicle and the plug of a charging cable, particularly, prompts automatic opening of a socket cap of the socket.

8. The method of any of the preceding claims, wherein the charging station, in response to authorizing the charging of the electric vehicle, enables (S16) a charging function of the charging station and/or enables a plug-and-charge function of the charging station.

9. The method of any of the preceding claims, wherein the charging station periodically scans (S11a) for the presence of an electric vehicle available for establishing a wireless data connection.

10. The method of any of the preceding claims, wherein the charging station receives (S23) charge mode setting information from the vehicle via the wireless data connection and sets operation parameters (S24) for a/the charging function according to the charge mode setting information.

11. The method of any of the preceding claims, wherein the method comprises a user binding (S21) the charging station to an application and registering (S22) an electric vehicle with the application, thereby registering the electric vehicle as eligible for using the charging station.

12. A system (1) comprising a charging station (2), the system configured to carry out the method of any of the preceding claims, in particular, the charging station configured to carry out the method of any one of claims 1 to 10.

13. The system of claim 12, further comprising an electric vehicle (3) configured for transmitting, to the charging station, identification data identifying the electric vehicle via the wireless data connection (4) and for being charged by the charging station in response to the charging station (2) authorizing the charging of the electric vehicle (3), particularly by plug-and-charge charging.

14. A computer program product comprising instructions which, when the program is executed by a computing system, cause the computing system to carry out the method of any of claims 1 to 11.

15. A computer-readable medium comprising instructions which, when executed by a computing system, cause the computing system to carry out the method of any of claims 1 to 11.
